# EUROPEAN PATENT APPLICATION

(11) **EP 4 407 847 A1**
(43) Date of publication of application: **31.07.2024**
(21) Application number: 22872660.0
(22) Date of filing: 31.08.2022
(51) Int. Cl.: H02K 9/06, E02F 9/00, H02K 5/20

(54) **MOTOR DEVICE AND CONSTRUCTION MACHINE**

(30) Priority: 22.09.2021 JP 2021153846
(71) Applicant: Nabtesco Corporation, Tokyo 102-0093 (JP)
(72) Inventor: NAKAMURA Kazuhito, Tokyo 102-0093 (JP)
(74) Representative: Grünecker Patent- und Rechtsanwälte PartG mbB
(86) International application number: PCT/JP2022/032757
(87) International publication number: WO 2023/047904

(57) **Abstract**

A motor device 1 includes: a stator 6 that includes multiple coils 61 that become electromagnets when energized; a rotor 4 that includes multiple permanent magnets 41 facing one surface of each of the multiple coils 61 and that is provided rotatably with respect to the stator 6; a housing 2 that houses the stator 6 and the rotor 4 in a sealed manner and that includes end spaces 10 and 11 located respectively at both ends of a rotational axis O of the rotor 4 and also includes a cavity 7 communicating with the end spaces 10 and 11 and provided on the other surface side of the multiple coils 61; and a fan 8 that makes a gas in the housing 2 to flow through a cooling flow path constituted by a gap 5 communicating with the end spaces 10 and 11 and provided between the one surface of each of the multiple coils 61 and the multiple permanent magnets 41, the end spaces 10 and 11, and the cavity 7.

## Description

### TECHNICAL FIELD

The present invention relates to a drive technique using an electric motor.

### BACKGROUND ART

As a construction machine used at a construction site, an electric construction machine driven by an electric motor (hereinafter, also referred to as a motor) and a hybrid construction machine in which both a hydraulic device and an electric motor are used are known (hereinafter, also collectively referred to as electric construction machines). An actuator that directly drives each drive unit of an electric construction machine by means of a mechanical element, such as a ball screw, driven by the rotational power of a motor is called an electro-mechanical actuator (EMA). Also, an actuator that indirectly drives each drive unit of an electric construction machine by means of a hydraulic device, such as a hydraulic pump, driven by the rotational power of a motor is called an electro-hydrostatic actuator (EHA).

### RELATED-ART LITERATURE

### PATENT LITERTURE

Patent Literature 1: Japanese Translation of PCT International Application Publication No. 2020-502990

### SUMMARY OF INVENTION

### TECHNICAL PROBLEM

Among the drive units of an electric construction machine, an undercarriage or a bucket comes into direct contact with the ground or a work object, so that dirt or mud may adhere to the motor housing thereof. To such a drive unit, if a motor provided with a number of cooling fins outside the housing, as disclosed in Patent Literature 1, is applied, the cooling fins may be buried with dirt or mud, so that it may be unable to cool the motor properly.

The present invention has been made in view of such a situation, and a purpose thereof is to provide a motor device that can be properly cooled even in a harsh environment.

### SOLUTION TO PROBLEM

To solve the problem above, a motor device according to one embodiment of the present invention includes: a stator that includes a coil that becomes an electromagnet when energized; a rotor that includes a permanent magnet facing one surface of the coil and that is provided rotatably with respect to the stator; a housing that houses the stator and the rotor in a sealed manner and that includes end spaces located respectively at both ends of a rotating shaft of the rotor and also includes a cavity communicating with the end spaces and provided on the other surface side of the coil; and a fan that makes a gas in the housing to flow through a cooling flow path constituted by a gap communicating with the end spaces and provided between the one surface and the permanent magnet, the end spaces, and the cavity.

According to the embodiment, since a cooling flow path constituted by the gap between the stator and the rotor, the end spaces, and a cavity is formed within the sealed housing, a coil of the stator can be properly cooled even in a harsh environment where dirt or mud may adhere to the outside of the housing. In the following embodiment, an electric construction machine employing a motor device of the present invention will be described as an example; however, the objects to which the present invention is applicable are not limited to electric construction machines.

Another embodiment of the present invention relates to a construction machine. The construction machine includes: an undercarriage capable of traveling on the ground; a rotating superstructure rotatably mounted on the undercarriage; a boom attached to the rotating superstructure such that the boom can be raised and lowered; an arm attached to the boom such as to be bendable; a bucket attached to the arm such as to be bendable; and a motor device that drives at least one of the undercarriage or the bucket. The motor device includes: a stator that includes a coil that becomes an electromagnet when energized; a rotor that includes a permanent magnet facing one surface of the coil and that is provided rotatably with respect to the stator; a housing that houses the stator and the rotor in a sealed manner and that includes end spaces located respectively at both ends of a rotating shaft of the rotor and also includes a cavity communicating with the end spaces and provided on the other surface side of the coil; and a fan that makes a gas in the housing to flow through a cooling flow path constituted by a gap communicating with the end spaces and provided between the one surface and the permanent magnet, the end spaces, and the cavity.

Optional combinations of the aforementioned constituting elements, and implementation of the present invention in the form of methods, apparatuses, systems, recording media, and computer programs may also be practiced as additional modes of the present invention.

### ADVANTAGEOUS EFFECTS OF INVENTION

According to the present invention, a motor device can be properly cooled even in a harsh environment.

### BRIEF DESCRIPTION OF DRAWINGS

[FIG. 1] FIG. 1 is a schematic configuration diagram of an electric construction machine.
[FIG. 2] FIG. 2 is a top view of the electric construction machine.
[FIG. 3] FIG. 3 is a sectional view of a motor device including a rotational axis.
[FIG. 4] FIG. 4 is a sectional view of the motor device taken along line A-A in FIG. 3.
[FIG. 5] FIG. 5 illustrates multiple permanent magnets arranged according to a Halbach array.
[FIG. 6] FIG. 6 illustrates a modification of the motor device.

### DESCRIPTION OF EMBODIMENTS

A motor device or a drive device of the present invention is applicable to an arbitrary device or machine that includes a drive unit or a movable part driven to rotate by a motor. Therefore, the apparatus or device to which the present invention is applicable is not particularly limited. As an example, the present embodiment describes an electric construction machine that includes multiple drive units, which each are driven by an actuator equipped with a motor and a reducer. Also, the present embodiment describes, as an example of the actuator, an EMA that directly drives each drive unit of an electric construction machine by means of a mechanical element driven by the rotational power of a motor. However, the present invention is also applicable to an EHA that indirectly drives each drive unit of an electric construction machine by means of a hydraulic device driven by the rotational power of a motor.

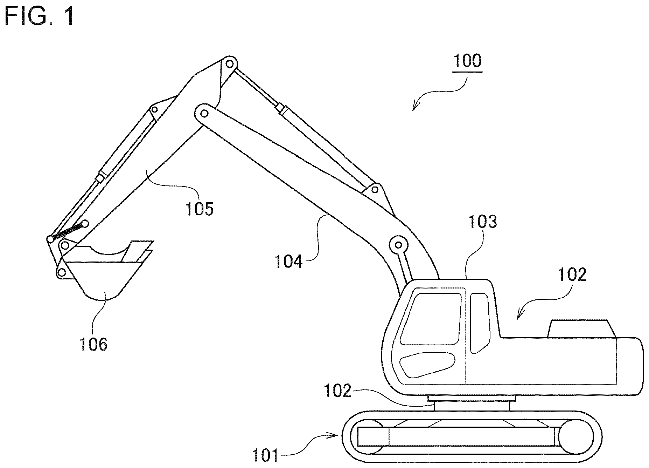

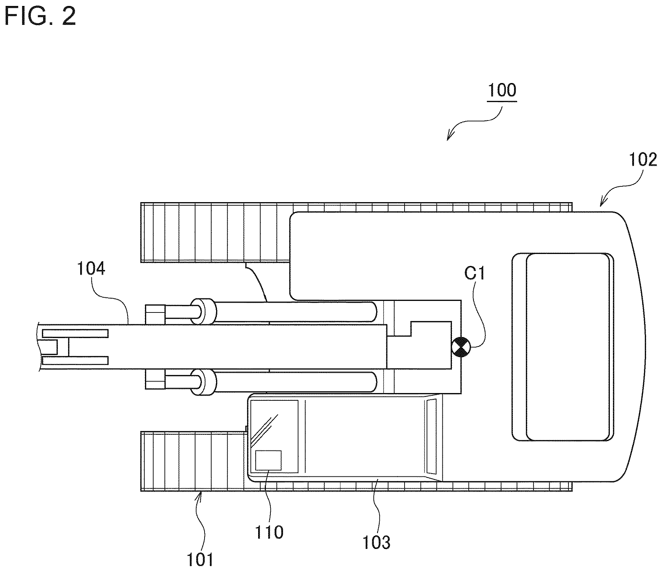

FIG. 1 is a schematic configuration diagram of an electric construction machine 100. FIG. 2 is a top view of the electric construction machine 100. In the following description, the orientation such as the front, rear, up, down, left, right, or the like is the same as the orientation of the electric construction machine 100. More specifically, in the following description, the front of the traveling direction of the electric construction machine 100 will be simply referred to as the front, and the rear of the traveling direction of the electric construction machine 100 will be simply referred to as the rear. The upper side of the gravity direction will be simply referred to as the upper side, and the lower side of the gravity direction will be simply referred to as the lower side. Also, when facing the front, the right side of a vehicle width direction will be simply referred to as the right side, and the left side of a vehicle width direction will be simply referred to as the left side.

In the electric construction machine 100 as a construction machine, a rotating superstructure 102 is rotatably mounted on an undercarriage 101 that can travel forward and backward on the ground. In the rotating superstructure 102, a cab 103 is provided on the front left side, and a boom 104 is attached in a front center part such that it can be raised and lowered. To the end of the boom 104, an arm 105 is attached such that it can be bent up and down. Also, to the end of the arm 105, a bucket 106 is attached such that it can be bent up and down.

To the front left side of the cab 103, a gyro sensor 110 is attached. In other words, in the rotating superstructure 102, the gyro sensor 110 is attached at a position maximally distant from the center C1 of rotation. The gyro sensor 110 is a sensor that can detect the inclination angle, inclination direction, rotating position, and rotational angular velocity of the cab 103 (or the undercarriage 101 or rotating superstructure 102). The inclination direction means the upward or downward direction of inclination.

Hereinafter, the undercarriage 101, rotating superstructure 102, boom 104, arm 105, and bucket 106 will be collectively referred to as drive units of the electric construction machine 100. Therefore, the electric construction machine 100 illustrated in FIGS. 1 and 2 is a construction machine that includes five drive units. The undercarriage 101 constitutes a traveling section that can travel on the ground, the rotating superstructure 102 constitutes a rotating section that can rotate with respect to the traveling section, and the boom 104, arm 105, and bucket 106 constitute a work section attached to the rotating section to perform work. Each actuator as a drive device for driving each drive unit of the electric construction machine 100 includes: an inverter that converts DC electricity from a DC power source, such as a battery, into AC electricity; a motor device that generates rotational power based on the AC electricity supplied from the inverter; and a reducer that decelerates the rotation of the motor device and obtains torque corresponding to the reduction ratio. In the following, a detailed configuration of the motor device will be described.

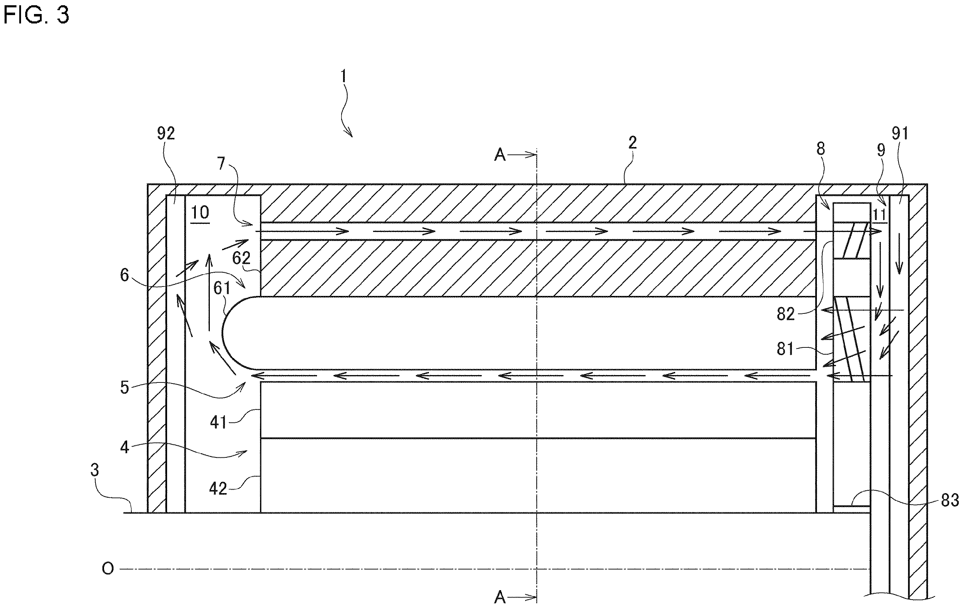

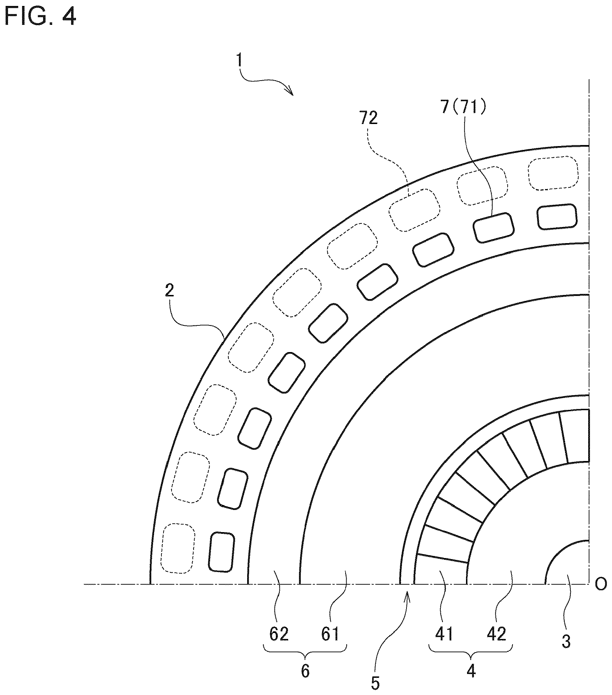

FIG. 3 is a sectional view of a motor device 1 including a rotational axis O, and FIG. 4 is a sectional view of the motor device 1 at a cross section taken along line A-A in FIG. 3, which is perpendicular to the rotational axis O. The motor device 1 includes: a housing 2 that houses therein the following constituting components of the motor device 1 in a sealed manner; a shaft member 3 that is provided rotatably around the rotational axis O and that outputs rotational power from the tip (the left end in FIG. 3) protruding outside the housing 2; a rotor 4 that is fixed to the shaft member 3 and rotatable in conjunction with the shaft member 3; a stator 6 fixed to the housing 2 and facing the rotor 4 across a gap 5 as a gap in a radial direction (vertical direction in FIG. 3); a cavity 7 that is provided on the back side of the stator 6, i.e., the side opposite to the surface of the stator 6 facing the rotor 4 and the gap 5, and that allows a cooling gas to flow therein; a fan 8 that is connected or fixed to a base end (the right end in FIG. 3) of the shaft member 3 by a connecting portion 83 and that generates a circulating flow of cooling gas in the gap 5 and the cavity 7; and a heat dissipation unit 9 that is fixed to each of both end surfaces in the housing 2 with respect to an axial direction (a left or right direction in FIG. 3) and that, through its uneven surface shape, absorbs heat stored in the cooling gas and releases it outside the housing 2. The arrows in FIG. 3 schematically represent flows of air as the cooling gas.

The rotor 4 includes multiple permanent magnets 41 arranged periodically along a circumferential direction or a rotational direction around the rotational axis O, and a support member 42 that interconnects the multiple permanent magnets 41. The multiple permanent magnets 41 are provided to face the gap 5 between the permanent magnets 41 and the stator 6 and are connected by the support member 42 on the opposite side. The support member 42 is formed of a soft magnetic material with high magnetic permeability, such as iron, carbon steel, silicon steel, permalloy, sendust, permendur, soft ferrite, amorphous magnetic alloy, and nanocrystalline magnetic alloy. The support member 42 containing iron is also called a yoke. The support member 42 may be also formed of a non-magnetic material.

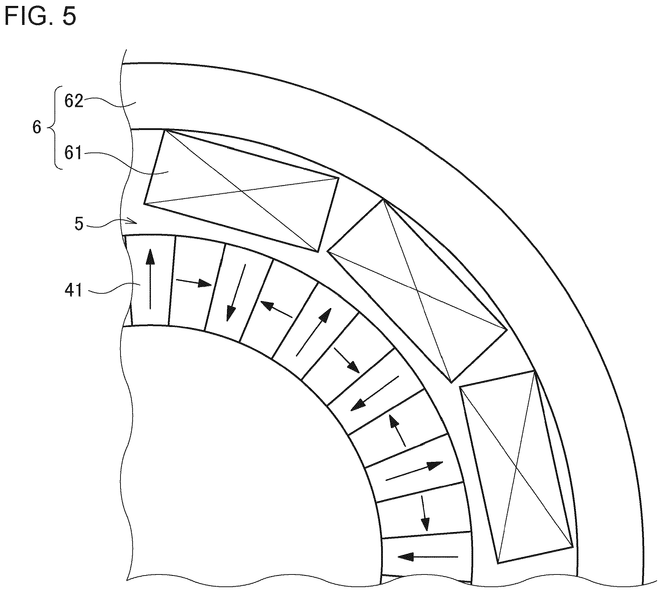

The multiple permanent magnets 41 are arranged such that the magnetic poles appear periodically along a circumferential direction, on the surface facing the stator 6. For example, the multiple permanent magnets 41 may be arranged such that the N pole and the S pole alternately appear along a circumferential direction on the surface facing the stator 6, or the multiple permanent magnets 41 may be arranged according to a Halbach array as shown in FIG. 5. A Halbach array is an array in which the magnetic pole direction of each permanent magnet 41 is rotated from the magnetic pole direction of a permanent magnet 41 adjacent thereto along a circumferential direction, by one of N equal parts of 2π (N is an integer greater than or equal to 3 or less than or equal to -3). In the illustrated example, N = 4, so that the magnetic pole direction of each of the permanent magnets 41 adjacent to each other along a circumferential direction is rotated by n/2, i.e., 90 degrees. With such a Halbach array, the strength of the magnetic field generated by the multiple permanent magnets 41 on the surface facing the stator 6 can be increased, so that the efficiency and the torque of the motor device 1 can be increased.

The stator 6 includes multiple coils 61 arranged along a circumferential direction, which become electromagnets when energized, and a yoke 62 that interconnects the multiple coils 61. As illustrated in FIG. 5, the multiple coils 61 are arranged at equal intervals along the rotational direction or a circumferential direction of the motor device 1, and one surface or end surface (the inner end surface in FIG. 5 or the lower end surface in FIG. 3) of each of the multiple coils 61 faces the multiple permanent magnets 41 of the rotor 4 across the gap 5. When a current of controlled magnitude and direction is applied to each coil 61 while the motor device 1 is driven to rotate, a periodic magnetic pole pattern of N and S poles rotating along a circumferential direction or a rotating magnetic field is developed on the surface facing the rotor 4, so that the rotor 4 including the multiple permanent magnets 41 rotates with respect to the stator 6. The yoke 62 is formed of a soft magnetic material containing iron.

It is known that, by arranging the multiple permanent magnets 41 in the rotor 4 according to a Halbach array as shown in FIG. 5, the magnetic field (in a radial direction) that occurs on the surface facing the stator 6 changes into a sinusoidal shape along a circumferential direction, so that the stator 6 can be made in a coreless structure. In the stator 6 of coreless structure, a core or an iron core around which each coil 61 is wound is not provided, so that each coil 61 is not confined by slots, which are grooves formed between the cores. Therefore, as schematically illustrated in FIG. 5, there are many gaps inside and between the coils 61, through which air as the cooling gas can flow, so that each coil 61 can be efficiently cooled. Further, by making the stator 6 to have a coreless structure, the radial thickness of each coil 61 can be reduced, so that the gap 5 between the stator 6 and the rotor 4 can be made larger. This can increase the amount of cooling gas flowing through the gap 5, thereby further improving the cooling efficiency.

A cavity 7 provided in the housing 2 is located on the side of the other surface or end surface (the upper surface in FIG. 3) of each coil 61 to face the yoke 62, and the cooling gas, which flows through the gap 5 between the one end surface (the lower surface in FIG. 3) of each coil 61 and the permanent magnets 41, can also flow through the cavity 7. As shown in FIG. 3, the gap 5 and the cavity 7 are provided parallel to each other along the rotational axis O of the rotor 4, and the cooling gas flows through the gap 5 and the cavity 7 in directions opposite to each other along the rotational axis O. That is, the cooling gas in the gap 5 flows from the base end side of the shaft member 3 (the right side in FIG. 3) to the left toward the tip side (the left side in FIG. 3), and the cooling gas in the cavity 7 flows from the tip side of the shaft member 3 to the right toward the base end side. On the tip side of the shaft member 3, a tip end space 10 is provided as an end space that communicates with the gap 5 and the cavity 7, and the direction of the cooling gas flowing out of the gap 5 to the left is diverted by the inner wall of the housing 2 or a tip side heat dissipation unit 92, which will be described later, such that the cooling gas flows to the right into the cavity 7. Also, on the base end side of the shaft member 3, a base end space 11 is provided as an end space that also communicates with the gap 5 and the cavity 7. In the base end space 11, together with a base end side heat dissipation unit 91, which will be described later, a fan 8 is provided to make the cooling gas to flow or circulate within the housing 2, and the direction of the cooling gas flowing out of the cavity 7 to the right is diverted such that the cooling gas flows to the left into the gap 5.

Thus, the gap 5 on one end surface side of a coil 61, the cavity 7 on the other end surface side of the coil 61, and the tip end space 10 and the base end space 11 communicating with the gap 5 and the cavity 7 can form a cooling flow path, through which air as the cooling gas circulates, such as to surround the coil 61 that generates heat when energized while the motor device 1 is driven to rotate. Therefore, the coil 61 can be efficiently cooled. The flowing directions of the cooling gas flowing through the gap 5 and the cavity 7 along the rotational axis O may be opposite to those shown in FIG. 3. That is, the cooling gas in the cavity 7 may flow from the base end side of the shaft member 3 (the right side in FIG. 3) to the left toward the tip side (the left side in FIG. 3), and the cooling gas in the gap 5 may flow from the tip side of the shaft member 3 to the right toward the base end side. Such a circulation direction of the cooling gas can be adjusted by the fan 8, the heat dissipation unit 9, or the both, as will be described later.

Although the cavity 7 in FIG. 3 is formed linearly to be parallel to the rotational axis O and the gap 5, the cavity 7 may be formed in an arbitrary direction as long as it communicates with the spaces on the tip side and the base end side of the shaft member 3 to allow the cooling gas to circulate. For example, the cavity 7 may be formed in a curved or spiral shape that meanders and communicates with the spaces on the tip side and the base end side of the shaft member 3. With such a cavity 7, the distance over which the cooling gas flows while in thermal contact with the stator 6 is increased, so that the cooling efficiency can be improved.

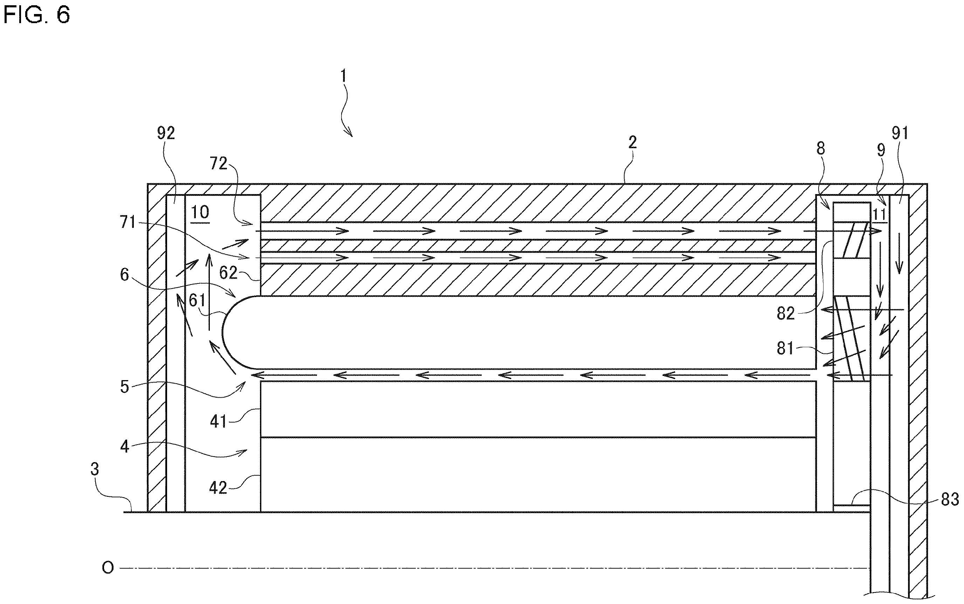

As illustrated in FIG. 4, multiple cavities 7 are provided to surround the end surface (the other end surface) on the yoke 62 side of the stator 6. By providing a number of thin tubular cavities 7 in this way, the area where the cooling gas flowing through a cavity 7 is in thermal contact with the stator 6 is increased, so that the cooling efficiency can be improved. Also, as shown in FIG. 6 as a modification, the thermal contact area between the cooling gas and the stator 6 may be increased by providing multiple cavities 71 and 72 at multiple positions where the distances from the rotational axis O are different. As illustrated, the farther from the rotational axis O, the larger the cross-sectional area of the cavity (72) can be made, thereby reducing thermal resistance. Also, outer cavities 72 are indicated by dotted lines in FIG. 4, and, with inner cavities 71 closer to the rotational axis O and the outer cavities 72 farther from the rotational axis O, a lattice-shaped or mesh-shaped cooling flow path network is formed outside the stator 6.

The fan 8 rotates in conjunction with the shaft member 3 and the rotor 4 on the base end side of the rotational axis O (the right end side in FIG. 3) and generates a flow of cooling gas in the gap 5 and a cavity 7. The fan 8 includes a first fan 81 that faces one end (the right end in FIG. 3) of the gap 5 and generates a flow of cooling gas in the gap 5, and a second fan 82 that faces one end (the right end in FIG. 3) of a cavity 7 and generates a flow of cooling gas in the cavity 7. The first fan 81 and the second fan 82 send the cooling gas in directions opposite to each other along the rotational axis O. In the example of FIG. 3, the first fan 81 sends the cooling gas to the left toward the gap 5, and the second fan 82 sends the cooling gas rightward away from the cavity 7. In other words, the first fan 81 blows the cooling gas into the gap 5, and the second fan 82 draws the cooling gas out of the cavity 7. The direction in which each of the fans 81 and 82 sends the cooling gas is determined by the installation direction or inclination direction of the blades. As schematically indicated by the diagonal lines in each of the fans 81 and 82 of FIG. 3, the installation directions or inclination directions of the blades of the first fan 81 and the second fan 82 are opposite to each other.

The heat dissipation unit 9 includes the base end side heat dissipation unit 91 fixed to the end surface (the right end surface in FIG. 3) or inner wall on the based end side of the rotational axis O in the housing 2, and the tip side heat dissipation unit 92 fixed to the end surface (the left end surface in FIG. 3) or inner wall on the tip side of the rotational axis O in the housing 2. Each of the heat dissipation units 91 and 92 is formed of a material with low thermal resistance, such as aluminum, and efficiently absorbs, through its uneven surface shape such as fins, heat stored in the cooling gas and releases, from its back surface, the heat outside the housing 2. To the base end side heat dissipation unit 91, air as the cooling gas is blown from the second fan 82, so that heat is efficiently dissipated in a manner similar to that with a heat sink and a fan commonly used in a personal computer or the like. Also, it may be preferable to change the direction of the unevenness formation in the surface shape of each of the heat dissipation units 91 and 92 so that air will naturally flows in the air circulation direction shown in FIG. 3, i.e., the direction from the top (outside) to the bottom (inside) in the base end side heat dissipation unit 91 and the direction from the bottom (inside) to the top (outside) in the tip side heat dissipation unit 92.

While the motor device 1 configured as described above is driven to rotate, the rotor 4, shaft member 3, and fan 8 rotate integrally with respect to the stator 6 and housing 2 as the rotating magnetic field is developed by the multiple energized coils 61 of the stator 6. When the fan 8 rotates, a circulating cooling flow path of the cooling gas through the gap 5 and a cavity 7 is formed, as indicated by the arrows in FIG. 3, so that the coils 61 that have been energized and have generated heat are efficiently cooled. Also, the heat stored in the cooling gas is efficiently released outside the housing 2 by the heat dissipation unit 9 provided on a circulating cooling flow path of the cooling gas.

According to the present embodiment, since a cooling flow path constituted by the gap 5 between the stator 6 and the rotor 4, a cavity 7, the tip end space 10, and the base end space 11 is formed within the sealed housing 2, the coils 61 of the stator 6 can be cooled properly even in a harsh environment where dirt or mud may adhere to the outside of the housing 2. In the electric construction machine 100 as shown in FIGS. 1 and 2, the motor device 1 of the present embodiment may be suitably applied to the undercarriage 101 and the bucket 106 to which dirt or mud is likely to adhere.

The present invention has been described based on an embodiment. The embodiment is intended to be illustrative only, and it will be obvious to those skilled in the art that various modifications to a combination of constituting elements or processes could be developed and that such modifications also fall within the scope of the present invention.

Although the embodiment describes an example of an EMA in which the motor device 1 directly drives each drive unit of the electric construction machine 100, each drive unit of the electric construction machine 100 may be indirectly driven by the motor device 1. For example, when each drive unit is directly driven by a hydraulic device such as a hydraulic motor or a hydraulic cylinder, the actuator may be configured as an EHA by using the motor device 1 to control a hydraulic valve used to control the oil pressure to each hydraulic device.

Although air is used as an example of the cooling gas in the embodiment, other gases may be used as the cooling gas.

In the embodiment, the rotor 4 is provided on the inside (lower side), and the stator 6 is provided on the outside, as illustrated in FIG. 3; however, the rotor 4 may be provided on the outside, and the stator 6 may be provided on the inside. In this case, a cavity 7 is formed on the inside of the stator 6.

The functional configuration of each device described in the embodiment can be implemented by hardware resources, software resources, or cooperation between hardware resources and software resources. As the hardware resources, processors, ROMs, RAMs, or other LSIs can be employed. As the software resources, programs, such as operating system programs and application programs, can be employed.

In the embodiment disclosed in the present specification, when multiple functions are provided in a distributed manner, some or all of the multiple functions may be collectively provided, and, conversely, when multiple functions are collectively provided, some or all of the multiple functions may be provided in a distributed manner. Regardless of whether the functions are aggregated or distributed, configurations have only to be made such that a purpose of the invention can be achieved.

### INDUSTRIAL APPLICABILITY

The present invention relates to a drive technique using an electric motor.

### REFERENCE SIGNS LIST

- 1: motor device
- 2: housing
- 3: shaft member
- 4: rotor
- 5: gap
- 6: stator
- 7: cavity
- 8: fan
- 9: heat dissipation unit
- 10: tip end space
- 11: base end space
- 41: permanent magnet
- 61: coil
- 62: yoke
- 81: first fan
- 82: second fan
- 83: connecting portion
- 100: electric construction machine
- 101: undercarriage
- 102: rotating superstructure
- 104: boom
- 105: arm
- 106: bucket

## Claims

1. A motor device, comprising:
a stator that comprises a coil that becomes an electromagnet when energized;
a rotor that comprises a permanent magnet facing one surface of the coil and that is provided rotatably with respect to the stator;
a housing that houses the stator and the rotor in a sealed manner and that includes end spaces located respectively at both ends of a rotating shaft of the rotor and also includes a cavity communicating with the end spaces and provided on the other surface side of the coil; and
a fan that makes a gas in the housing to flow through a cooling flow path constituted by a gap communicating with the end spaces and provided between the one surface and the permanent magnet, the end spaces, and the cavity.

2. The motor device according to Claim 1,
wherein the gap and the cavity are provided along the rotating shaft and
wherein flowing directions of the gas flowing through the gap and the cavity along the rotating shaft are opposite to each other.

3. The motor device according to Claim 1 or 2, further comprising a connecting portion that connects the fan to the rotating shaft of the rotor.

4. The motor device according to any one of Claims 1 through 3, wherein the fan is provided in at least one of the end spaces.

5. The motor device according to any one of Claims 1 through 4,
wherein the fan includes a first fan that faces one end of the gap in a direction of the rotating shaft and generates a flow of the gas in the gap, and a second fan that faces one end of the cavity in a direction of the rotating shaft and generates a flow of the gas in the cavity and
wherein the first fan and the second fan send the gas in directions opposite to each other along the rotating shaft.

6. The motor device according to any one of Claims 1 through 5, wherein a plurality of the cavities are provided to surround the other surface of the stator.

7. The motor device according to any one of Claims 1 through 6, wherein the stator has a coreless structure in which a core around which the coil is wound is not provided.

8. The motor device according to Claim 7, wherein the rotor includes a Halbach array in which the magnetic pole direction of the permanent magnet is rotated from the magnetic pole direction of a permanent magnet adjacent thereto along a rotational direction, by one of N equal parts of 2π (N is an integer greater than or equal to 3 or less than or equal to -3).

9. A construction machine, comprising:
an undercarriage capable of traveling on the ground;
a rotating superstructure rotatably mounted on the undercarriage;
a boom attached to the rotating superstructure such that the boom can be raised and lowered;
an arm attached to the boom such as to be bendable;
a bucket attached to the arm such as to be bendable; and
a motor device that drives at least one of the undercarriage or the bucket,
the motor device comprising:
a stator that comprises a coil that becomes an electromagnet when energized;
a rotor that comprises a permanent magnet facing one surface of the coil and that is provided rotatably with respect to the stator;
a housing that houses the stator and the rotor in a sealed manner and that includes end spaces located respectively at both ends of a rotating shaft of the rotor and also includes a cavity communicating with the end spaces and provided on the other surface side of the coil; and
a fan that makes a gas in the housing to flow through a cooling flow path constituted by a gap communicating with the end spaces and provided between the one surface and the permanent magnet, the end spaces, and the cavity.
